# DEMANDE DE BREVET EUROPEEN

(11) **EP 2 116 881 A1**
(43) Date de publication de la demande: **11.11.2009**
(21) Numéro de dépôt: 09159109.9
(22) Date de dépôt: 29.04.2009
(51) Int. Cl.: G02B 6/44

(54) **Boitier de repartition de fibres optiques**

(30) Priorité: 07.05.2008 FR 0853019
(71) Demandeur: Nexans, 75008 Paris (FR)
(72) Inventeur: Renard, Xavier, 78410, AUGERGENVILLE (FR); Milanowski, Michel, 60540, ANSERVILLE (FR); Helvenstein, Réal, B-7022, HARMIGNES (BE); Alessi, Luigi, 59600, MAUBEUGE (FR)
(74) Mandataire: Gauer, Pierre

(57) **Abrégé**

L'invention a pour objet un boîtier (1) de répartition de fibres optiques depuis un câble principal (4) vers au moins une gaine (5) d'acheminement de fibres optiques, **caractérisé en ce qu**'il comprend :
- une zone de réception (6) du câble principal (4), de forme allongée,
- au moins une zone de réception (7) de gaine d'acheminement (5), et
- au moins un élément de guidage (8) de fibres optiques, comprenant au moins une portion courbe (8b,8c) apte à guider les fibres optiques depuis le câble principal (4) jusqu'à la (aux) gaine(s) d'acheminement (5).

## Description

L'invention a pour objet un boîtier de répartition de fibres optiques depuis un câble principal vers au moins une gaine d'acheminement de fibres optiques chez un utilisateur.

Le développement des réseaux de fibres optiques pour les applications professionnelles et domestiques connaît une forte croissance.

Il est connu, pour distribuer des fibres optiques depuis un câble principal vers des utilisateurs, d'utiliser des boîtiers de lovage et de raccordement de fibres optiques, appelés de manière courante sous la dénomination de cassettes. De telles cassettes sont notamment décrites dans le document EP 0 557 188.

Ces cassettes sont affectées à plusieurs fibres optiques à raccorder l'une à l'autre. Elles comprennent à cet effet des moyens de lovage, et des moyens de raccordement à l'aide d'épissures (raccordement par soudure de fibres optiques) ou de connecteurs (raccordement de type mécanique).

La formation des raccordements est toutefois longue est complexe, car il faut dénuder, couper et cliver l'extrémité des fibres optiques, avant de les diriger vers l'utilisateur. Par ailleurs, le lovage des fibres peut conduire à une atténuation du signal dans les fibres.

La présente invention vise à remédier à ces inconvénients.

Elle propose un dispositif de répartition de fibres optiques compact, d'utilisation simple et qui limite les risques d'atténuation de signal dans les fibres.

L'invention a ainsi pour objet un boîtier de répartition de fibres optiques depuis un câble principal vers au moins une gaine d'acheminement de fibres optiques.

Le boîtier selon l'invention comprend :
- une zone de réception du câble principal, de préférence de forme allongée,
- au moins une zone de réception de gaine d'acheminement, et
- au moins un élément de guidage de fibres optiques, comprenant au moins une portion courbe apte à guider les fibres optiques depuis le câble principal jusqu'à la (aux) gaine(s) d'acheminement.

Les fibres optiques sont ainsi dirigées depuis le câble principal vers les gaines d'acheminement, ce qui permet d'acheminer directement les fibres chez l'utilisateur, en évitant le lovage des fibres et la formation d'épissures à proximité du câble principal.

La courbure du ou des éléments de guidage sera de préférence choisie de manière à éviter des pertes de signal dans les fibres.

Chaque zone de réception de gaine d'acheminement peut être apte à accueillir une gaine parallèle ou transversale au câble principal. On peut ainsi répartir les fibres dans des différentes directions suivant la position des utilisateurs par rapport au boîtier de répartition.

Le ou les éléments de guidage comprennent avantageusement une portion courbe dite longitudinale, apte à guider les fibres optiques dans une direction parallèle au câble principal, et une portion courbe dite transversale, apte à guider les fibres optiques dans une direction orthogonale au câble principal. Ainsi, un même élément de guidage permet de guider les fibres selon une direction longitudinale et une direction transversale.

Le ou les éléments de guidage comprennent de préférence deux portions courbes transversales, afin de guider les fibres optiques vers plusieurs niveaux transversaux.

Le rayon de courbure de la portion courbe longitudinale est avantageusement supérieur ou égal au rayon de courbure de la ou des portions courbes transversales. Les fibres peuvent de cette façon passer facilement d'une portion transversale d'un élément de guidage à une portion longitudinale d'un autre élément de guidage, et inversement.

Le boîtier peut comprendre deux éléments de guidage de fibres optiques, disposés le long de la zone de réception du câble principal, et du même côté de la zone de réception du câble principal. Le boîtier permet ainsi de guider les fibres d'un côté de la zone de réception du câble principal. Pour les guider de l'autre côté, il suffit alors de monter le boîtier dans l'autre sens.

Pour un guidage optimisé des fibres de chaque côté de la zone de réception du câble principal, le boîtier peut comprendre quatre éléments de guidage de fibres optiques, disposées le long de la zone de réception du câble principal, et de part et d'autre de la zone de réception du câble principal.

La ou les zones de réception de gaine d'acheminement et la zone de réception du câble principal peuvent être disposées de manière à ce que la ou les gaines d'acheminement soient situées dans un plan proximal de la surface du boîtier et à ce que le câble principal soit situé dans un plan distal de la surface du boîtier. Grâce à cet agencement, on évite une courbure non souhaitable des fibres sur le câble principal. La disposition du câble principal et des gaines d'acheminement dans deux plans différents permet un meilleur guidage des fibres depuis le câble principal vers les gaines d'acheminement.

Pour les mêmes raisons, la portion courbe du ou des éléments de guidage comprend de préférence une partie située dans le plan des gaines d'acheminement.

Le boîtier peut comprendre en outre au moins une cassette de lovage de fibres et de maintien d'épissures.

L'invention a également pour objet l'utilisation d'un boîtier décrit ci-dessus pour la répartition de fibres optiques depuis un câble principal vers au moins une gaine d'acheminement de fibres optiques.

Pour gagner davantage de place, le boîtier selon l'invention peut avantageusement être positionné dans un coffret d'acheminement, par exemple un coffret d'acheminement de gaines techniques d'immeuble ou un coffret d'acheminement de câbles électriques.

D'autres avantages et caractéristiques de l'invention apparaîtront à la lecture de la description suivante, donnée uniquement à titre d'exemple nullement limitatif, et faite en référence aux dessins annexées, sur lesquels :
- la figure 1 est une vue en perspective d'un boîtier de répartition de fibres optiques selon l'invention,
- la figure 2 est une vue éclatée en perspective du boîtier,
- la figure 3 est une vue en perspective de l'intérieur du boîtier,
- la figure 4 est une vue de côté de l'intérieur du boîtier,
- la figure 5A illustre en perspective un guidage de fibres dans le boîtier, conformément à un premier mode de réalisation,
- la figure 5B illustre en perspective un guidage de fibres dans le boîtier, conformément à un deuxième mode de réalisation,
- la figure 5C illustre en perspective un guidage de fibres dans le boîtier, conformément à un troisième mode de réalisation, et
- les figures 6A et 6B illustrent en perspective un guidage de fibres dans le boîtier, conformément à un quatrième mode de réalisation.

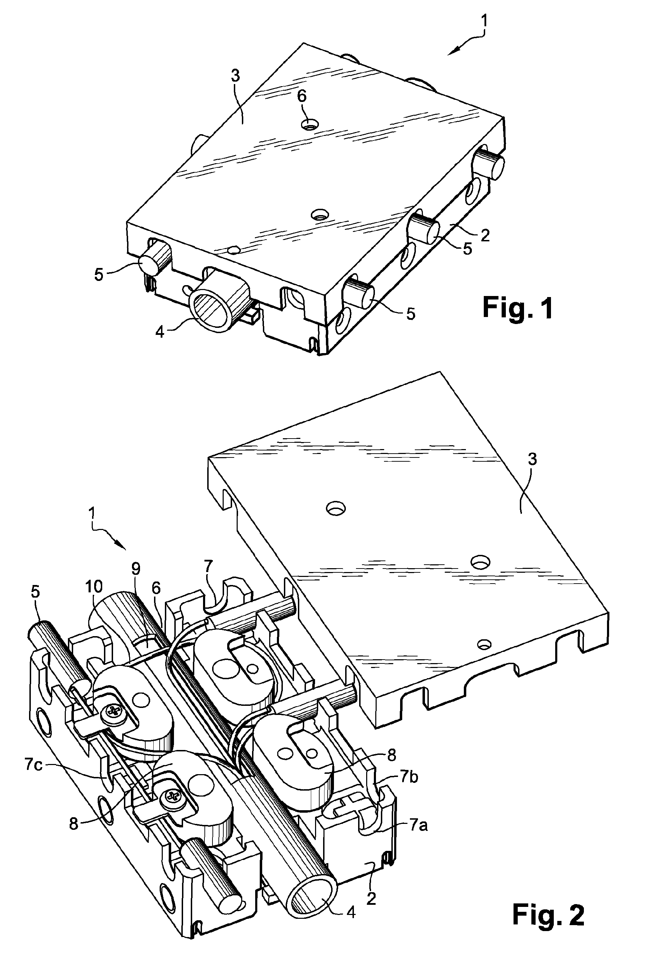

Le boîtier 1 de répartition de fibres optiques, tel qu'illustré à la figure 1, comprend un corps de boîtier 2 et un couvercle 3. Il est apte à répartir des fibres optiques depuis un câble principal 4 en direction de gaines 5. Le corps de boîtier 2 et le couvercle 3 du boîtier 1 sont avantageusement réalisés en matière plastique, par exemple par moulage par injection.

Le couvercle 3 est fixé sur le corps de boîtier 2 à l'aide de vis 6. Le couvercle 3 peut également être encliqueté.

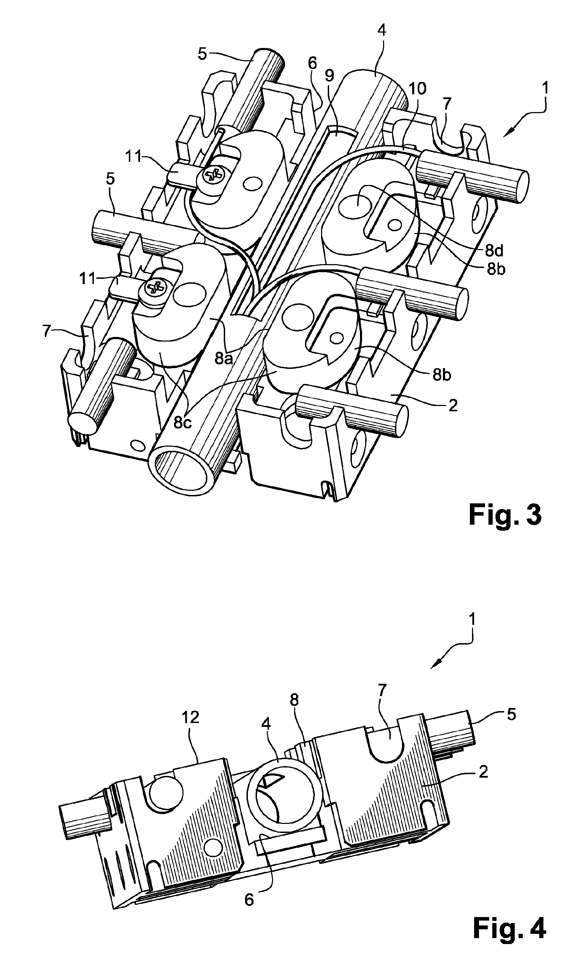

L'intérieur du boîtier 1 est illustré sur les figures 2 et 3, sur laquelle les éléments identiques à ceux de la figure 1 portent les mêmes références.

Le boîtier 1 est de forme allongée, et présente une section longitudinale sensiblement rectangulaire. Il comprend une rainure 6 apte à recevoir le câble principal 4. Des zones 7 de réception de gaine d'acheminement sont disposées de part et d'autre de la rainure 6. Les zones 7 sont aptes à recevoir trois gaines 5 de chaque côté de la rainure 6, une en bas, une au milieu, et une en haut du boîtier 1. Les zones 7 de réception sont des ouvertures pratiquées dans la paroi extérieure du corps de boîtier 2, par exemple sous la forme de créneaux.

Le boîtier 1 comprend deux zones 7a,7b de réception de gaine 5 à chaque coin du boîtier 1, une zone 7a étant apte à recevoir une gaine 5 parallèlement au câble principal 4, et une zone 7b étant apte à recevoir une gaine 5 orthogonalement au câble principal 4. Le boîtier 1 comprend en outre des zones 7c de réception de gaine 5 disposées au milieu des faces latérales du boîtier 7 et aptes à recevoir une gaine 5 orthogonalement au câble principal 4.

Le boîtier 1 comprend en outre quatre éléments de guidage 8 disposés de chaque côté et le long de la rainure 6. Les éléments de guidage 8 sont en saillie du corps de boîtier 2. Ils sont avantageusement disposés symétriquement par rapport à la rainure 6. Chaque élément de guidage 8 comprend une portion rectiligne 8a située dans le prolongement vertical d'un bord de la rainure 6, une portion courbe 8b dite longitudinale, apte à guider les fibres optiques dans une direction parallèle au câble principal 4, et deux portions courbes 8c dites transversales, apte à guider les fibres optiques dans une direction orthogonale au câble principal 4.

Pour ne pas trop courber les fibres, le rayon de courbure de la portion courbe longitudinale 8b est de préférence supérieur à 15 mm. Plus généralement, on pourra choisir les courbures des éléments de guidage 8 en fonction de la nature de la fibre, de manière à ne pas avoir de perte de signal dans la fibre.

Le rayon de courbure des portions courbes transversales 8c est inférieur ou égal au rayon de courbure de la portion courbe longitudinale 8b, ce qui facilite le passage des fibres d'une portion transversale 8c à une portion longitudinale 8b, et facilite ainsi le guidage des fibres vers une gaine 5 disposée transversalement au câble principal 4. Le rayon de courbure des portions courbes transversales 8c est de préférence supérieur à 5 mm.

Les éléments de guidage 8 sont en outre munis de trous 8d, pour le vissage du couvercle 3 sur le corps de boîtier 2. Le boîtier 1 peut également comprendre des butées 11 de guidage longitudinale de fibres. Les butées 11 sont par exemple vissées à une de leurs extrémités sur les éléments de guidage 8.

Pour répartir les fibres optiques vers les gaines 5 d'acheminement, une ouverture 9, également appelée fenêtre, est pratiquée dans la gaine du câble principal 4, sur une portion de la hauteur du boîtier 1. Les fibres optiques sont disposées dans des microtubes 10, qui sont apparents du fait de l'ouverture du tube principal 4.

Tel qu'illustré à la figure 4, sur laquelle les éléments identiques à ceux des figures 1 à 3 portent les mêmes références, les zones de réception 7 des gaines d'acheminement 5 et la rainure 6 de réception du câble principal 4 sont disposées de manière à ce que les gaines d'acheminement 5 soient situées dans un plan proximal de la surface supérieure 12 du boîtier 1 et à ce que le câble principal 4 soit situé dans un plan distal de la surface supérieure 12 du boîtier 1. Ainsi, les gaines d'acheminement 5 sont disposées au-dessus du câble principal 4. Les éléments de guidage 8 comprennent également une partie située dans le plan des gaines d'acheminement 5.

La suite de la description est consacrée à quatre modes de guidage des fibres optiques depuis le câble principal 4 jusqu'aux gaines d'acheminement 5. Dans ces modes de réalisation, le boîtier 1 est disposé verticalement, de manière à ce que le câble principal 4 puisse acheminer des fibres optiques à différents étages d'un immeuble. On peut toutefois également envisager une disposition horizontale du boîtier 1, pour une répartition des fibres sur un même niveau.

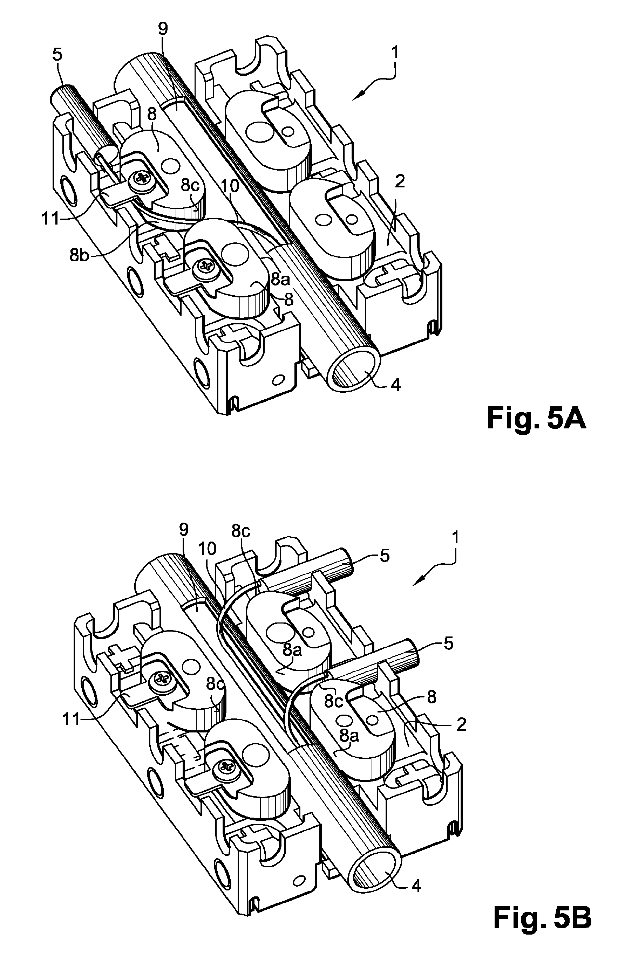

Selon un premier mode de réalisation, tel qu'illustré à la figure 5A, on souhaite diriger les fibres vers la gaine d'acheminement 5 située verticalement, parallèlement au câble principal 4, en haut et à gauche du boîtier 1. Dans ce cas, les fibres longent la portion rectiligne 8a de l'élément de guidage 8 inférieur gauche du boîtier 1, puis sont guidées vers la gaine 5 en suivant successivement la portion courbe transversale 8c supérieure de l'élément de guidage 8 inférieur gauche, puis la portion courbe transversale 8c inférieure de l'élément de guidage 8 supérieur gauche, et enfin la portion courbe longitudinale 8b de l'élément de guidage 8 supérieur gauche.

Dans un deuxième mode de réalisation, tel qu'illustré à la figure 5B, les fibres sont guidées depuis le câble principal 4 vers les gaines d'acheminement 5 situées horizontalement, transversalement au câble principal 4, à droite, au milieu et en haut du boîtier 1. Pour ce faire, les fibres longent dans un premier temps la portion rectiligne 8a de l'élément de guidage 8 inférieur droit. Elles sont guidées vers la gaine 5 positionnée au milieu du boîtier 1 par la portion courbe transversale supérieure 8c de l'élément de guidage 8 inférieur droit. Elles sont guidées vers la gaine 5 positionnée en haut du boîtier 1 en longeant la portion rectiligne 8a de l'élément de guidage 8 supérieur droit, puis en suivant la portion courbe transversale supérieure 8c de l'élément de guidage 8 supérieur droit.

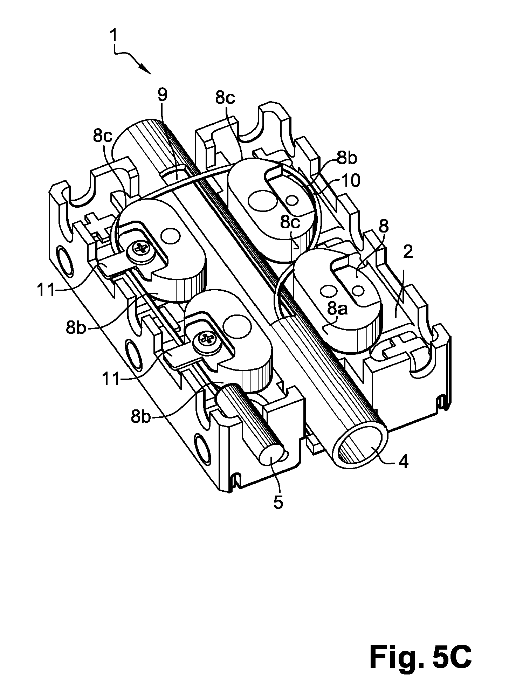

Dans un troisième mode de réalisation, tel qu'illustré à la figure 5C, on souhaite diriger les fibres depuis le câble principal 4 vers la gaine d'acheminement 5 située verticalement, parallèlement au câble principal 4, en bas et à gauche du boîtier 1. Pour minimiser la courbure des fibres lors de leur guidage, les quatre éléments de guidage 8 sont utilisés. Les fibres longent d'abord la portion rectiligne 8a de l'élément de guidage 8 inférieur droit, puis suivent successivement la portion courbe transversale supérieure 8c de l'élément de guidage 8 inférieur droit et la portion courbe transversale inférieure 8c de l'élément de guidage 8 supérieur droit. Les fibres épousent ensuite la portion courbe longitudinale 8b de l'élément de guidage 8 supérieur droit et la portion courbe transversale supérieure 8c de l'élément de guidage 8 supérieur droit puis passent de l'autre côté du boîtier 1. Grâce à la disposition des éléments de guidage 8, qui possèdent une partie de portion courbe 8b,8c située au-dessus du câble principal 4, les fibres peuvent passer du côté droit au côté gauche du boîtier, au-dessus du câble principal 4, de façon rectiligne. Les fibres passent ensuite successivement sur la portion transversale supérieure 8c de l'élément de guidage 8 supérieur gauche, puis sur les portions courbes longitudinales 8b de l'élément de guidage 8 supérieur gauche et de l'élément de guidage 8 inférieur gauche, en étant guidées en outre par les butées 11, avant de rejoindre la gaine 5 inférieure gauche.

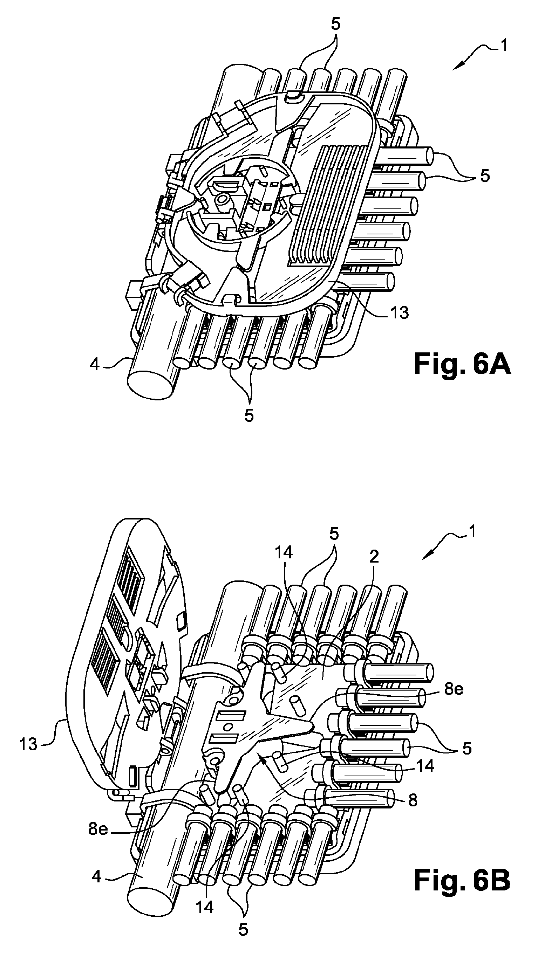

Dans un quatrième mode de réalisation, tel qu'illustré aux figures 6A et 6B, le boîtier 1 comprend une cassette 13 de lovage de fibres et de maintien d'épissures. Ce type de cassette est bien connu et est par exemple décrit dans le document EP 1 026 530. La cassette 13 est montée en liaison pivot sur le corps de boîtier 2 et est représentée en position rabattue sur la figure 6A.

La cassette 13 permet de réaliser une épissure en cas de cassure d'une fibre. Outre cette fonction de réparation, elle permet également d'ajouter de la longueur de fibre si on ne dispose pas d'une longueur de fibre suffisante vers l'utilisateur.

La cassette 13 est représentée en position déployée sur la figure 6B. Le câble principal 4 est situé dans un plan situé sous le plan des gaines 5 d'acheminement. Le boîtier 1 comprend un élément de guidage 8 en saillie du corps de boîtier 2, et disposé dans le plan des gaines 5, à proximité du câble principal 4. L'élément de guidage 8 comprend une portion rectiligne situé dans le prolongement vertical de la zone de réception du câble principal 4, une portion courbe longitudinale, et deux portions courbes transversales.

L'élément de guidage 8 comprend en outre des pattes 8e qui permettent de maintenir les fibres issues du câble principal 4 dans le plan des gaines 5. Des plots 14 sont disposés à proximité de l'élément de guidage 8 afin de faciliter le guidage des fibres vers les différentes gaines 5. L'unique élément de guidage 8 permet de diriger les fibres issues du câble principal 4 vers des gaines 5 disposées à la fois parallèlement et orthogonalement au câble principal 4.

Ainsi, grâce au boîtier de répartition de fibres optiques selon l'invention, il est possible de répartir directement les fibres chez l'utilisateur, via des gaines d'acheminement, et ce de façon simple et compacte. Par rapport aux dispositifs connus, qui nécessitent de couper les fibres et d'ajouter des fibres supplémentaires, on laisse une surlongueur de fibres, par exemple de l'ordre d'une dizaine de mètres, en bout de ligne, par exemple au dernier étage. Ainsi, lors d'un routage des fibres chez un abonné, à un étage quelconque, on peut extraire les fibres par la fenêtre du câble principal, pour les diriger chez l'abonné. Le boîtier selon l'invention permet donc d'éviter l'emploi d'une soudeuse, qui occasionnerait des coûts supplémentaires. Il est de mise en oeuvre simplifiée, et permet de limiter les atténuations de signal en diminuant le nombre de points de connexion entre fibres.

De plus, le boîtier est particulièrement adapté pour être disposé dans un coffret de distribution de câbles électriques, du fait de sa petite taille, ce qui permet un gain de place important par rapport à l'utilisation de cassettes de l'état de la technique.

## Revendications

1. Boîtier (1) de répartition de fibres optiques depuis un câble principal (4) vers au moins une gaine (5) d'acheminement de fibres optiques, **caractérisé en ce qu'**il comprend :
une zone de réception (6) du câble principal (4), de forme allongée,
au moins une zone de réception (7) de gaine d'acheminement (5), et
au moins un élément de guidage (8) de fibres optiques, comprenant au moins une portion courbe (8b,8c) apte à guider les fibres optiques depuis le câble principal (4) jusqu'à la (aux) gaine(s) d'acheminement (5).

2. Boîtier (1) selon la revendication 1, **caractérisé en ce que** chaque zone de réception (7) de gaine d'acheminement (5) est apte à accueillir une gaine (5) parallèle ou transversale au câble principal (4).

3. Boîtier (1) selon la revendication 1 ou 2, **caractérisé en ce que** le ou les éléments de guidage (8) comprennent une portion courbe (8b) dite longitudinale, apte à guider les fibres optiques dans une direction parallèle au câble principal (4), et une portion courbe (8c) dite transversale, apte à guider les fibres optiques dans une direction orthogonale au câble principal (4).

4. Boîtier (1) selon la revendication 3, **caractérisé en ce que** le ou les éléments de guidage (8) comprennent deux portions courbes transversales (8c).

5. Boîtier (1) selon la revendication 3 ou 4, **caractérisé en ce que** le rayon de courbure de la portion courbe longitudinale (8b) est supérieur ou égal au rayon de courbure de la ou des portions courbes transversales (8c).

6. Boîtier (1) selon l'une des revendications 1 à 5, **caractérisé en ce qu'**il comprend deux éléments de guidage (8) de fibres optiques, disposés le long de la zone (6) de réception du câble principal, et du même côté de la zone (6) de réception du câble principal (4).

7. Boîtier (1) selon l'une des revendications 1 à 6, **caractérisé en ce qu'**il comprend quatre éléments de guidage (8) de fibres optiques, disposées le long de la zone de réception (6) du câble principal (4), et de part et d'autre de la zone de réception (6) du câble principal (4).

8. Boîtier (1) selon l'une des revendications 1 à 7, **caractérisé en ce que** la ou les zones de réception (7) de gaine d'acheminement (5) et la zone de réception (6) du câble principal (4) sont disposées de manière à ce que la ou les gaines d'acheminement (5) soient situées dans un plan proximal de la surface (12) du boîtier (1) et à ce que le câble principal (4) soit situé dans un plan distal de la surface (12) du boîtier (1).

9. Boîtier (1) selon la revendication 8, **caractérisé en ce que** la portion courbe (8b,8c) du ou des éléments de guidage (8) comprend une partie située dans le plan des gaines d'acheminement (5).

10. Boîtier (1) selon l'une des revendications 1 à 9, **caractérisé en ce qu'**il comprend en outre au moins une cassette (13) de lovage de fibres et de maintien d'épissures.

11. Utilisation d'un boîtier (1) selon l'une des revendications 1 à 10 pour la répartition de fibres optiques depuis un câble principal (4) vers au moins une gaine d'acheminement (5) de fibres optiques.

12. Utilisation selon la revendication 11, **caractérisée en ce que** le boîtier (1) est positionné dans un coffret d'acheminement.

13. Utilisation selon la revendication 12, **caractérisée en ce que** le coffret d'acheminement est un coffret d'acheminement de câbles électriques.

## Revendications modifiées

### Revendications modifiées conformément à la règle 137(2) CBE.

**1.** Boîtier (1) de répartition de fibres optiques depuis un câble principal (4) vers une pluralité de gaines (5) d'acheminement de fibres optiques, **caractérisé en ce qu'**il comprend :
une zone de réception (6) du câble principal (4), de forme allongée,
une pluralité de zones de réception (7) de gaine d'acheminement (5), et
au moins un élément de guidage (8) de fibres optiques, comprenant au moins une portion courbe (8b,8c) apte à guider les fibres optiques depuis le câble principal (4) jusqu'aux gaines d'acheminement (5),
et **en ce que** les zones de réception (7) de gaine d'acheminement (5) et la zone de réception (6) du câble principal (4) sont disposées de manière à ce que les gaines d'acheminement (5) soient situées dans un plan proximal de la surface (12) du boîtier (1) et à ce que le câble principal (4) soit situé dans un plan distal de la surface (12) du boîtier (1).

**2.** Boîtier (1) selon la revendication 1, **caractérisé en ce que** chaque zone de réception (7) de gaine d'acheminement (5) est apte à accueillir une gaine (5) parallèle ou transversale au câble principal (4).

**3.** Boîtier (1) selon la revendication 1 ou 2, **caractérisé en ce que** le ou les éléments de guidage (8) comprennent une portion courbe (8b) dite longitudinale, apte à guider les fibres optiques dans une direction parallèle au câble principal (4), et une portion courbe (8c) dite transversale, apte à guider les fibres optiques dans une direction orthogonale au câble principal (4).

**4.** Boîtier (1) selon la revendication 3, **caractérisé en ce que** le ou les éléments de guidage (8) comprennent deux portions courbes transversales (8c).

**5.** Boîtier (1) selon la revendication 3 ou 4, **caractérisé en ce que** le rayon de courbure de la portion courbe longitudinale (8b) est supérieur ou égal au rayon de courbure de la ou des portions courbes transversales (8c).

**6.** Boîtier (1) selon l'une des revendications 1 à 5, **caractérisé en ce qu'**il comprend deux éléments de guidage (8) de fibres optiques, disposés le long de la zone (6) de réception du câble principal, et du même côté de la zone (6) de réception du câble principal (4).

**7.** Boîtier (1) selon l'une des revendications 1 à 6, **caractérisé en ce qu'**il comprend quatre éléments de guidage (8) de fibres optiques, disposées le long de la zone de réception (6) du câble principal (4), et de part et d'autre de la zone de réception (6) du câble principal (4).

**8.** Boîtier (1) selon la revendication 7, **caractérisé en ce que** la portion courbe (8b,8c) du ou des éléments de guidage (8) comprend une partie située dans le plan des gaines d'acheminement (5).

**9.** Boîtier (1) selon l'une des revendications 1 à 8, **caractérisé en ce qu'**il comprend en outre au moins une cassette (13) de lovage de fibres et de maintien d'épissures.

**10.** Utilisation d'un boîtier (1) selon l'une des revendications 1 à 9 pour la répartition de fibres optiques depuis un câble principal (4) vers une pluralité de gaines d'acheminement (5) de fibres optiques.

**11.** Utilisation selon la revendication 10, **caractérisée en ce que** le boîtier (1) est positionné dans un coffret d'acheminement.

**12.** Utilisation selon la revendication 11, **caractérisée en ce que** le coffret d'acheminement est un coffret d'acheminement de câbles électriques.
